# FASCICULE DE BREVET EUROPEEN

(11) **EP 3 972 901 B1**
(45) Date de publication et mention de la délivrance du brevet: **09.11.2022**
(21) Numéro de dépôt: 20735619.7
(22) Date de dépôt: 07.07.2020
(51) Int. Cl.: B64D 27/02, B64D 27/10, B64D 27/24, B64D 35/04

(54) **CHAINE PROPULSIVE HYBRIDE POUR AÉRONEF COMPORTANT UN SYSTÈME AUXILIAIRE D'ENTRAINEMENT MÉCANIQUE**
HYBRIDANTRIEBSSTRANG FÜR FLUGZEUGE MIT MECHANISCHEM BEHELFSANTRIEB
HYBRID AIRCRAFT DRIVE TRAIN WITH AUXILIAR MECHANICAL DRIVE

(30) Priorité: 09.07.2019 FR 1907646
(43) Date de publication de la demande: 30.03.2022
(73) Titulaire: Safran Helicopter Engines, 64510 Bordes (FR)
(72) Inventeur: SERGHINE, Camel, 77550 MOISSY-CRAMAYEL (FR); KLONOWSKI, Thomas, 77550 MOISSY-CRAMAYEL (FR); VIVE, Lois, Pierre, Denis, 77550 MOISSY-CRAMAYEL (FR)
(74) Mandataire: Argyma
(86) Numéro de dépôt international: PCT/EP2020/069119
(87) Numéro de publication internationale: WO 2021/005057

(56) Documents cités:
- WO-A1-2017/009037
- FR-A1- 3 056 555
- US-A1- 2017 174 355
- US-A1- 2018 037 333
- US-A1- 2019 061 924

## Description

### DOMAINE TECHNIQUE DE L'INVENTION

La présente invention concerne le domaine de la propulsion d'un aéronef comprenant plusieurs rotors propulsifs alimentés électriquement par une turbomachine de génération électrique non propulsive.

De manière connue, il a été proposé d'équiper un aéronef avec un système de propulsion hybride comportant une turbomachine de génération électrique non propulsive, une batterie et une pluralité de rotors alimentés électriquement. Un tel système de propulsion hybride permet de transporter des biens et marchandises de manière optimale en limitant les nuisances sonores et la consommation de carburant.

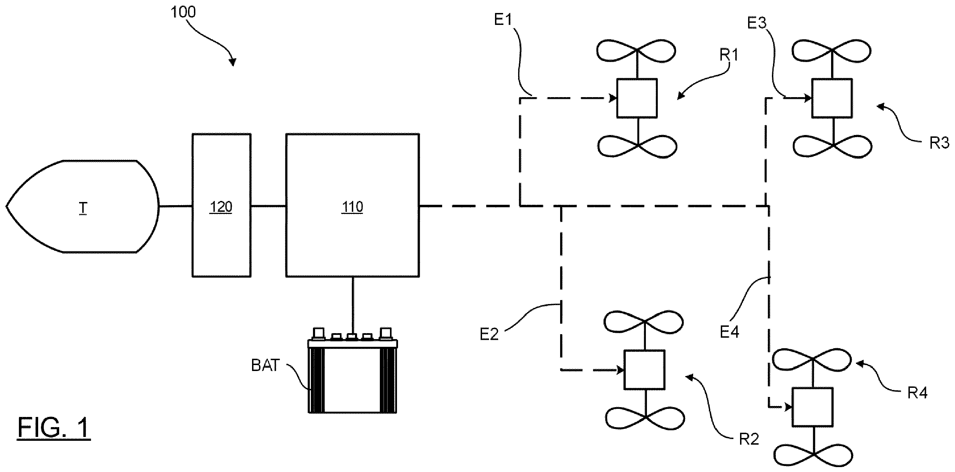

En référence à la figure 1, il est représenté une chaine propulsive hybride d'un aéronef 100 selon l'art antérieur. Dans cet exemple, la chaine propulsive hybride 100 comporte une pluralité de rotors propulsifs R1-R4 alimentés électriquement par un module de répartition 110 lui-même alimenté, d'une part, par une turbomachine non propulsive T via un système de génération électrique 120 et, d'autre part, via une batterie électrique BAT. Chaque rotor propulsif R1-R4 est relié au module de répartition d'énergie 110 par un ou plusieurs bus d'alimentation électrique E1-E4.

En pratique, la batterie BAT doit être surdimensionnée par rapport au besoin en fonctionnement normal de manière à pouvoir fournir de l'énergie électrique supplémentaire en cas de besoin soit temporaire tel que la phase de décollage et l'atterrissage, soit exceptionnel tel qu'une phase d'évitement ou de contournement, soit lors de la défaillance ou de la non disponibilité d'un élément de la chaine propulsive. Un surdimensionnement de la batterie BAT entraine une augmentation de la masse de batterie, au regard de l'état de l'art actuel sur les densités massiques de puissance des cellules électrochimiques, limitant ainsi la capacité utile d'emport de passagers ou de charges de l'aéronef.

Un des objectifs de la présente invention est de proposer une chaine propulsive hybride permettant de fournir de l'énergie mécanique supplémentaire en cas de besoin exceptionnel ou lors de la défaillance ou de la non disponibilité d'un élément de la chaine propulsive tout en ayant une masse limitée afin de ne pas réduire la capacité de transport de passagers ou de marchandises.

De manière incidente, il est connu un aéronef comportant, d'une part, un rotor propulsif entrainé de manière mécanique et, d'autre part, un rotor propulsif entrainé de manière électrique.

Le document US 2019/061924 A1 enseigne une chaine propulsive de plusieurs rotors propulsifs qui sont entrainés de manière mécanique via une boite à engrenages, du type planétaire, entrainée par une turbomachine. Le document US2018/037333A1 enseigne une chaine propulsive hybride qui comporte un générateur électrique qui alimente des moteurs électriques.

### PRESENTATION DE L'INVENTION

L'invention concerne une chaine propulsive hybride pour aéronef, la chaine propulsive hybride comportant une pluralité de rotors propulsifs reliés à un module de répartition électrique par une pluralité de liaisons électriques, le module de répartition électrique étant relié, d'une part, à une turbomachine non propulsive via un système de génération électrique et, d'autre part, à une batterie électrique, chaque rotor propulsif comportant un organe de stator et au moins un arbre de rotor qui est configuré pour être entrainé en rotation par rapport à l'organe de stator lorsque l'organe de stator est alimenté par au moins une liaison électrique.

L'invention est remarquable en ce que la chaine propulsive hybride comporte un système auxiliaire d'entrainement mécanique relié mécaniquement à la turbomachine non propulsive, le système auxiliaire d'entrainement mécanique comportant une pluralité de liaisons mécaniques pour entrainer mécaniquement en rotation au moins un arbre de rotor de chaque rotor propulsif.

Par turbomachine non propulsive, on entend une turbomachine que ne permet pas de fournir directement un effort de propulsion au moyen d'une hélice en fonctionnement normal. Cela s'oppose à une turbomachine équipée d'une soufflante. Par système auxiliaire, on entend un système qui n'est actif qu'en cas de besoin. Par définition, le terme auxiliaire correspond à quelque chose « sui s'ajoute à quelque chose d'autre, momentanément ou accessoirement ».

Grâce à l'invention, lors d'une panne de la chaine propulsive hybride sans indisponibilité de la turbomachine non propulsive, on peut avantageusement prélever de la puissance mécanique sur la turbomachine non propulsive afin d'entrainer un ou plusieurs rotors propulsifs via les liaisons mécaniques. La fiabilité de la chaine propulsive est améliorée sans augmenter la masse de manière importante comme cela serait le cas en dupliquant ou redondant les batteries. De manière avantageuse, les liaisons mécaniques et les liaisons électriques peuvent être utilisées de manière concomitante de manière à fournir aux rotors propulsifs une puissance propulsive supplémentaire, par exemple, lors du décollage ou atterrissage, pour réaliser un évitement, etc.

De préférence, le système de génération électrique comporte un module de répartition mécanique relié mécaniquement en entrée à la turbomachine non propulsive et mécaniquement en sortie à au moins une génératrice de courant. Le système auxiliaire d'entrainement mécanique est relié au module de répartition mécanique. Ainsi, le système auxiliaire d'entrainement mécanique est intégré au système de génération électrique, ce qui permet de limiter l'encombrement et la masse.

De préférence encore, les liaisons mécaniques du système auxiliaire d'entrainement mécanique sont reliées en sortie du module de répartition mécanique. De manière avantageuse, le module de répartition mécanique comporte des sorties pour des génératrices de courant et des sorties pour les liaisons mécaniques, l'architecture étant compacte.

De préférence, la chaine propulsive hybride comporte un module de répartition mécanique relié mécaniquement en entrée à la turbomachine non propulsive et mécaniquement en sortie, d'une part, au système de génération électrique et, d'autre part, au système auxiliaire d'entrainement mécanique. Ainsi, le système auxiliaire d'entrainement mécanique est relié mécaniquement à la turbomachine non propulsive de manière indirecte. De manière avantageuse, l'utilisation d'un module de répartition mécanique permet de contrôler l'utilisation de la propulsion mécanique et électrique.

Selon un aspect, chaque liaison mécanique est reliée à un arbre de rotor d'un rotor propulsif par un dispositif de couplage commandable. Cela permet avantageusement de commander un entrainement mécanique qu'en cas de besoin, de préférence, pour assurer une redondance.

De préférence, le dispositif de couplage commandable est configuré pour être activé automatiquement en cas de chute de la vitesse de l'arbre de rotor d'un rotor propulsif par rapport à sa vitesse de consigne lorsque le rotor propulsif est alimenté par une liaison électrique. Ainsi, le dispositif de couplage permet d'assurer une sécurité en cas de dysfonctionnement. Par chute de la vitesse, on entend une diminution de l'ordre 5% à 10% de la vitesse nominale au cours d'une période de l'ordre de 1 seconde.

Selon un aspect, le dispositif de couplage commandable comporte au moins une roue libre. De manière avantageuse, une telle roue libre permet de réaliser un couplage automatique en cas de baisse de vitesse.

Selon un autre aspect, le dispositif de couplage commandable comporte au moins un premier organe de friction et au moins un deuxième organe de friction.

Selon un aspect, chaque rotor propulsif comporte au moins une soufflante propulsive, de préférence, deux soufflantes propulsives contrarotatives.

L'invention concerne également un aéronef comportant une chaine propulsive hybride telle que présentée précédemment.

L'invention concerne en outre un procédé d'utilisation d'un aéronef tel que présenté précédemment, le procédé comportant :
- une étape d'entrainement d'une pluralité de rotors propulsifs via les liaisons électriques, et
- une étape d'entrainement d'au moins un desdits rotors propulsifs via au moins une liaison mécanique en cas d'indisponibilité partielle ou totale du système de génération électrique.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique d'une chaine de propulsion hybride d'un aéronef selon l'art antérieur ;
La figure 2 est une représentation schématique d'une chaine de propulsion hybride d'un aéronef selon une première forme de réalisation de l'invention ;
La figure 3 est une représentation schématique d'une chaine de propulsion hybride d'un aéronef selon une deuxième forme de réalisation de l'invention ;
La figure 4 est une représentation schématique du système de génération électrique de la chaine de propulsion hybride de la figure 3 ;
La figure 5 est une représentation schématique en coupe d'un rotor propulsif équipé d'un premier exemple de système de couplage commandable ;
La figure 6 est une représentation schématique en coupe d'un rotor propulsif équipé d'un deuxième exemple de système de couplage commandable ;
La figure 7 est une représentation schématique en coupe d'un rotor propulsif comportant deux soufflantes propulsives contrarotatives et
La figure 8 est une représentation schématique d'une chaine de propulsion hybride d'un aéronef selon une troisième forme de réalisation de l'invention.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

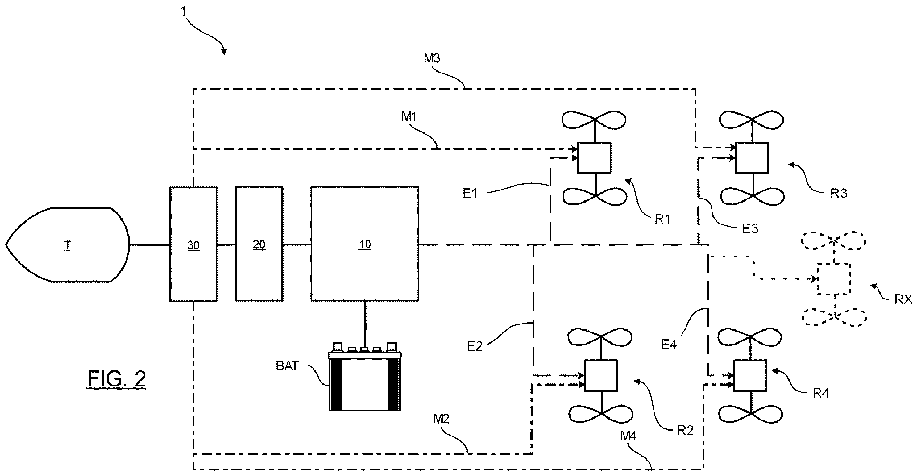

En référence à la figure 2, il est représenté une chaine propulsive hybride 1 pour aéronef selon une forme de réalisation de l'invention. Dans cet exemple, la chaine propulsive hybride 1 comporte une pluralité de rotors propulsifs R1-R4 reliés à un module de répartition électrique 10 par une pluralité de liaisons électriques E1-E4, le module de répartition électrique 10 étant relié, d'une part, à une turbomachine non propulsive T via un système de génération électrique 20 et, d'autre part, à une batterie électrique BAT. Par batterie électrique BAT, on entend aussi bien une unique batterie électrique BAT qu'un ensemble de plusieurs batteries BAT.

La turbomachine non propulsive T peut se présenter sous diverses formes, en particulier, une turbine à gaz à turbine liée, une turbine à gaz à turbine libre, un moteur à pistons ou analogues. De manière avantageuse, la turbomachine non propulsive T est thermique.

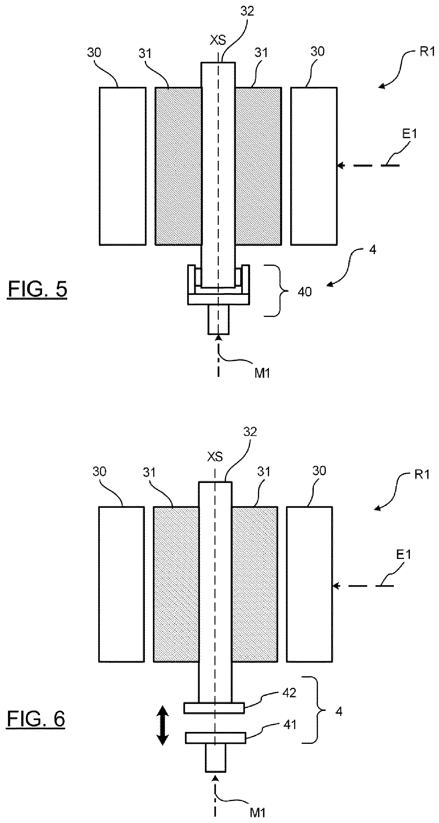

Dans cet exemple, il est représenté 4 rotors propulsifs R1-R4 mais il va de soi que leur nombre pourrait être différent. Des rotors propulsifs supplémentaires RX pourraient être prévus comme illustré à la figure 2. Comme illustré aux figures 5 et 6 qui seront présentées en détails par la suite, chaque rotor propulsif R1-R4 comporte un organe de stator 30 et un arbre de rotor 32 qui est configuré pour être entrainé en rotation autour d'un axe XS par rapport à l'organe de stator 30 lorsque l'organe de stator 30 est alimenté électriquement. Chaque rotor propulsif R1-R4 comporte une soufflante propulsive (non représentée) fixée à l'arbre de rotor 32. Dans cet exemple, chaque rotor propulsif R1-R4 comporte un organe de rotor 31 monté solidairement à l'arbre de rotor 32. L'organe de rotor 31 est couplé de manière magnétique à l'organe de stator 30 de manière à former un moteur électrique, par exemple, du type synchrone à aimant permanent, synchrone à organes de rotor bobinés, asynchrone, à reluctance, etc.

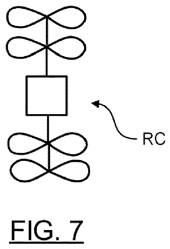

En référence à la figure 7, Selon un aspect de l'invention, chaque rotor propulsif RC comporte deux soufflantes propulsives contrarotatives. A titre d'exemple, l'arbre de rotor 32 entraine un deuxième arbre de rotor sur lequel est montée la deuxième soufflante. En outre, chaque soufflante peut être carénée ou non, orientable ou non. De manière optionnelle, chaque rotor propulsif R1-R4 peut comprendre un convertisseur électrique, par exemple, un onduleur.

Un module de répartition électrique 10 est connu en soi de l'homme du métier et permet de gérer les ressources électriques de la batterie BAT et du système de génération électrique 20 en fonction des besoins des rotors propulsifs R1-R4, du niveau de charge de la batterie BAT, des conditions de fonctionnement de l'aéronef, etc. Le module de répartition électrique 10 est relié à chaque rotor propulsif R1-R4 par une ou plusieurs liaisons électriques E1-E4. De manière préférée, le module de répartition électrique 10 comporte des convertisseurs électroniques de puissance afin d'adapter si nécessaire le niveau et la forme (alternative/continu) de la tension électrique en sortie des systèmes de génération électrique 20, des composants pilotés ou non assurant le transport et la distribution du courant électrique (bornier, relais...) et des composants pilotés ou non assurant la sécurité des biens et des personnes (disjoncteur, fusibles...).

Dans cet exemple, chaque liaison électrique E1-E4 se présente sous la forme d'un bus d'alimentation mais il va de soi qu'elle pourrait se présenter sous une forme différente. De manière préférée, chaque liaison électrique E1-E4 comporte des moyens de protection électrique, en particulier, un fusible, un disjoncteur, un contacteur ou autre.

En référence aux figures 5 et 6, chaque liaison électrique E1-E4 alimente électriquement l'organe de stator 30 d'un rotor propulsif R1-R4 de manière à entrainer magnétiquement l'organe de rotor 31 en rotation de manière magnétique. Comme l'organe de rotor 31 est solidaire de l'arbre de rotor 32 et de la soufflante, la soufflante est également entrainée en rotation, ce qui fournit la poussée du rotor propulsif R1-R4.

Le système de génération électrique 20 comprend de manière connue une ou plusieurs génératrices de courant ainsi qu'un ou plusieurs convertisseurs, en particulier du type AC-DC. A titre d'exemple, une génératrice de courant peut se présenter sous la forme d'une machine électrique synchrone à aimant permanent, une machine électrique synchrone à rotors bobinés ou une machine asynchrone. De même, à titre d'exemple, le convertisseur peut se présenter sous la forme d'un redresseur passif à diodes, d'un redresseur actif piloté ou analogue, ou d'un onduleur réversible.

Selon l'invention, en référence à la figure 2, la chaine propulsive hybride 1 comporte un système auxiliaire d'entrainement mécanique 30 relié mécaniquement à la turbomachine non propulsive T. Le système auxiliaire d'entrainement mécanique 30 comporte une pluralité de liaisons mécaniques M1-M4 pour entrainer mécaniquement l'arbre de rotor 32 de chaque rotor propulsif R1-R4 en rotation. De manière préférée, chaque liaison mécanique M1-M4 se présente sous la forme d'un arbre d'entrainement qui est adapté pour être entrainé en rotation par la turbomachine non propulsive T.

Autrement dit, dans cet exemple, chaque rotor propulsif R1-R4 est relié, d'une part, à une liaison électrique E1-E4 de manière à permettre une poussée électrique du rotor propulsif R1-R4 et, d'autre part, à une liaison mécanique M1-M4 de manière à permettre une poussée mécanique du rotor propulsif R1-R4. Ainsi, chaque rotor propulsif R1-R4 est redondé de manière à améliorer la fiabilité de la chaine propulsive hybride 1.

Selon une première forme de réalisation de l'invention, en référence à la figure 2, le système auxiliaire d'entrainement mécanique 30 est distinct du système de génération électrique 20.

De manière préférée, comme illustré à la figure 2, le système de génération électrique 20 est relié au système auxiliaire d'entrainement mécanique 30 qui est configuré pour prélever un premier couple mécanique pour le système de génération électrique 20 et un deuxième couple mécanique pour entrainer les liaisons mécaniques M1-M4. Un tel système auxiliaire d'entrainement mécanique 30 est également désigné « dispositif de transmission auxiliaire ».

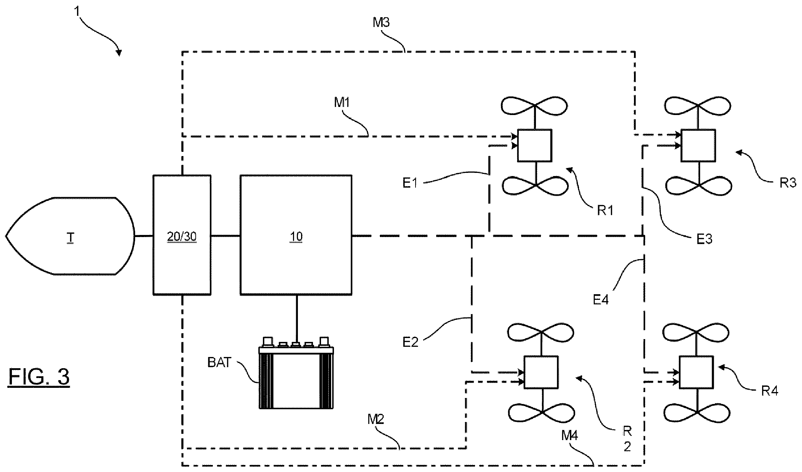

Selon une deuxième forme de réalisation de l'invention, en référence à la figure 3, le système auxiliaire d'entrainement mécanique 30 est intégré au système de génération électrique 20. Une telle intégration permet de limiter l'encombrement global ainsi que la masse. Autrement dit, le dispositif de prélèvement de puissance est intégré au système de génération électrique 20.

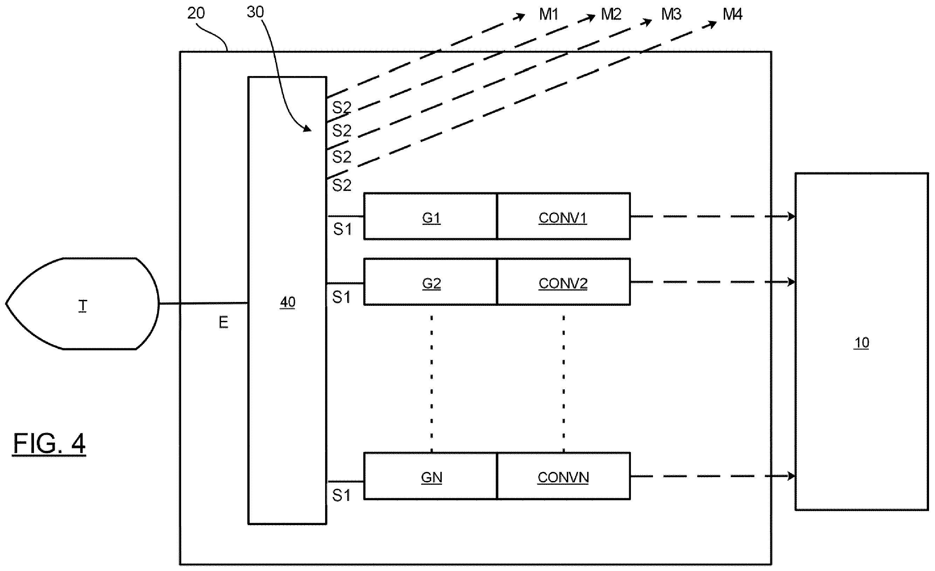

A titre d'exemple, en référence à la figure 4, le système de génération électrique 20 comporte une pluralité de génératrices de courant G1, G2, GN ainsi qu'une pluralité de convertisseurs CONV1, CONV2, CONVN afin d'alimenter électriquement le module de répartition électrique 10. Le système de génération électrique 20 comporte en outre un module de répartition mécanique 40 comportant une entrée E adaptée pour recevoir un couple mécanique d'entrée de la turbomachine non propulsive T et une pluralité de première sorties S1 pour fournir des couples mécaniques élémentaires aux génératrices de courant G1, G2, GN afin qu'elles génèrent de l'énergie électrique.

Dans cet exemple, le module de répartition mécanique 40 comporte en outre une pluralité de deuxièmes sorties S2 pour fournir des couples mécaniques élémentaires aux liaisons mécaniques M1-M4 pour les entrainer en rotation. Autrement dit, le module de répartition mécanique 40 permet, d'une part, de fournir de l'énergie mécanique pour alimenter indirectement les liaisons électriques E1-E4 et, d'autre part, pour fournir de l'énergie mécanique pour alimenter directement les liaisons mécaniques M1-M4. Ainsi, le système auxiliaire d'entrainement mécanique 30 est relié directement au module de répartition mécanique 40.

Dans cet exemple, le module de répartition mécanique 40 comporte une pluralité d'engrenages et se présente, de préférence, sous la forme d'un train d'engrenages.

Selon un aspect, le module de répartition mécanique 40 est commandable de manière à activer/inactiver les deuxièmes sorties S2 en fonction des conditions de fonctionnement. Comme cela sera présenté par la suite, les deuxièmes sorties S2 sont de préférence activées en cas de défaut de la génération électrique ou lors d'un besoin en puissance propulsive supplémentaire. Par besoin en puissance supplémentaire, on entend un besoin en puissance supérieur à 100% de la puissance électrique nominale, de préférence, inférieur à 130% de la puissance électrique nominale.

Pour permettre la commande, le module de répartition mécanique 40 comporte, un système de découplage commandable, par exemple, du type embrayage, coupleur hydro cinétique, à crabots ou autre.

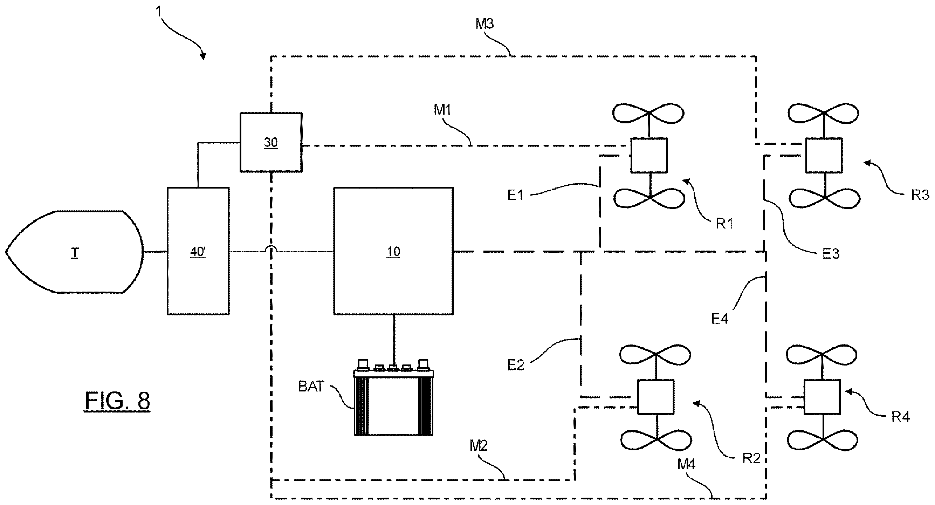

Selon une autre forme de réalisation, en référence à la figure 8, la chaine propulsive hybride 1 comporte un module de répartition mécanique 40' relié mécaniquement en entrée à la turbomachine non propulsive T et mécaniquement en sortie, d'une part, au système de génération électrique 20 et, d'autre part, au système auxiliaire d'entrainement mécanique 30. Ainsi, le système auxiliaire d'entrainement mécanique 30 est relié mécaniquement à la turbomachine non propulsive de manière indirecte. De préférence, le système de génération électrique 20 et le système auxiliaire d'entrainement mécanique 30 demeurent indépendants. L'architecture est parallèle.

De préférence, chaque liaison mécanique M1-M4 est reliée à un arbre de rotor 32 d'un rotor propulsif R1-R4 par un dispositif de couplage commandable de manière à pouvoir activer ou inactiver un entrainement de l'arbre de rotor 32 du rotor propulsif R1-R4 par la liaison mécanique M1-M4.

A titre d'exemple, en référence aux figures 5 et 6, il est représenté un rotor propulsif R1 comportant un organe de stator 30 relié à une liaison électrique E1 et un arbre de rotor 32 qui est configuré pour être entrainé en rotation par rapport à l'organe de stator 30 lorsque l'organe de stator 30 est alimenté électriquement. L'arbre de rotor 32 est relié à la liaison mécanique M1 par l'intermédiaire d'un dispositif de couplage commandable 4 permettant de coupler ou découpler mécaniquement la liaison mécanique M1 et l'arbre de rotor 32.

En référence à la figure 5, selon une première forme de réalisation, le dispositif de couplage commandable 4 comporte une roue libre 40. Cela permet avantageusement un couplage en fonction de la vitesse relative de la liaison mécanique M1 et de l'arbre de rotor 32. A titre d'exemple, la liaison électrique E1 entraine l'arbre de rotor 32 à une vitesse supérieure à celle de la liaison mécanique M1, la roue libre 40 ne réalisant pas de couplage. Lors de l'arrêt de la liaison électrique E1, la vitesse de rotation de la liaison mécanique M1 est plus importante que celle de l'arbre de rotor 32. La roue libre 40 réalise alors un couplage mécanique de la liaison mécanique M1 et de l'arbre de rotor 32.

De manière avantageuse, le dispositif de couplage commandable 4 est activé en cas de chute de la vitesse de l'arbre de rotor 32 par rapport à sa vitesse de consigne. De préférence, la chaine propulsive hybride 1 est configurée pour entrainer chaque liaison mécanique M1-M4 à la vitesse de rotation de consigne des rotors propulsifs R1-R4. Ainsi, en cas d'entrainement mécanique, celui-ci est optimal. De préférence, la chaine propulsive hybride 1 est configurée pour entrainer électriquement chaque rotor propulsif R1-R4 à une vitesse de rotation supérieure à celle de la vitesse de rotation de la liaison mécanique M1-M4, c'est-à-dire, supérieure à la vitesse de rotation de consigne des rotors propulsifs R1-R4. De préférence, la vitesse de rotation est supérieure de l'ordre de quelques pourcents par rapport à la vitesse de rotation de consigne, par exemple, de l'ordre de 3%.

De manière avantageuse, du fait de la faible différence de vitesse, en cas de défaut d'alimentation électrique, la liaison mécanique M1-M4 prend automatiquement le relais de manière douce, sans heurts et sans à-coups.

En référence à la figure 6, selon une deuxième forme de réalisation, le dispositif de couplage commandable 4 comporte un premier organe de friction 41, solidaire de la liaison mécanique M1, et un deuxième organe de friction 42, solidaire de l'arbre de rotor 32, configuré pour coopérer avec le premier organe de friction 41 lorsque la liaison mécanique M1 et l'arbre de rotor 32 sont couplés mécaniquement. Lorsque la liaison mécanique M1 et l'arbre de rotor 32 ne sont pas couplés mécaniquement, le premier organe de friction 41 demeure écarté du deuxième organe de friction 42. Un tel système d'embrayage est connu dans le domaine des véhicules de transport.

Il va de soi que la liaison mécanique M1 pourrait également être en prise directe avec l'arbre de rotor 32, par exemple, par utilisation d'un renvoi conique ou d'un cardan.

Un exemple de mise en œuvre de la chaine propulsive hybride 1 va être dorénavant présenté.

Lors d'un fonctionnement normal de la chaine propulsive hybride 1, la turbomachine non propulsive T génère de l'énergie électrique qui alimente les rotors propulsifs R1-R4 via les liaisons électriques E1-E4. Au cours de ce fonctionnement, les liaisons mécaniques M1-M4 ne sont pas activées.

Lors d'une panne de la chaine propulsive hybride 1 sans indisponibilité de la turbomachine non propulsive T (en particulier une panne de génération électrique), on peut avantageusement prélever de la puissance mécanique sur la turbomachine non propulsive T afin d'entrainer un ou plusieurs rotors propulsifs R1-R4 via les liaisons mécaniques M1-M4 qui ont été activées.

De manière avantageuse, les liaisons mécaniques M1-M4 et les liaisons électriques E1-E4 peuvent être utilisées de manière concomitante de manière à fournir aux rotors propulsifs R1-R4 une puissance propulsive supplémentaire, par exemple, lors du décollage ou atterrissage, pour réaliser un évitement, etc.

Grâce à l'invention, une telle chaine propulsive hybride 1 possède une masse contenue pour améliorer la disponibilité et la fiabilité par comparaison à l'ajout de nouvelles batteries électriques BAT. Un tel système auxiliaire d'entrainement mécanique 30 possède une fiabilité éprouvée du fait qu'il repose essentiellement sur des organes mécaniques. De manière avantageuse, la masse des batteries électriques BAT peut être réduite en tirant avantage du système auxiliaire d'entrainement mécanique 30 qui permet de répondre aux différents besoins propulsifs.

## Revendications

1. Chaine propulsive hybride (1) pour aéronef, la chaine propulsive hybride (1) comportant une pluralité de rotors propulsifs (R1-RX) reliés à un module de répartition électrique (10) par une pluralité de liaisons électriques (E1-E4), le module de répartition électrique (10) étant relié, d'une part, à une turbomachine non propulsive (T) via un système de génération électrique (20) et, d'autre part, à une batterie électrique (BAT), chaque rotor propulsif (R1-R4) comportant un organe de stator (30) et au moins un arbre de rotor (32) qui est configuré pour être entrainé en rotation par rapport à l'organe de stator (30) lorsque l'organe de stator (30) est alimenté par au moins une liaison électrique (E1-E4), la chaine propulsive hybride comportant un système auxiliaire d'entrainement mécanique (30) relié mécaniquement à la turbomachine non propulsive (T), le système auxiliaire d'entrainement mécanique (30) comportant une pluralité de liaisons mécaniques (M1-M4) pour entrainer mécaniquement en rotation au moins un arbre de rotor (32) de chaque rotor propulsif (R1-R4), chaque liaison mécanique (M1-M4) étant reliée à un arbre de rotor (32) d'un rotor propulsif (R1-R4) par un dispositif de couplage commandable (4).

2. Chaine propulsive hybride (1) selon la revendication 1, dans laquelle, le système de génération électrique (20) comportant un module de répartition mécanique (40) relié mécaniquement en entrée à la turbomachine non propulsive (T) et mécaniquement en sortie à au moins une génératrice de courant (G1, G2, GN), le système auxiliaire d'entrainement mécanique (30) est relié au module de répartition mécanique (40).

3. Chaine propulsive hybride (1) selon la revendication 2, dans laquelle, les liaisons mécaniques (M1-M4) du système auxiliaire d'entrainement mécanique (30) sont reliées en sortie au module de répartition mécanique (40).

4. Chaine propulsive hybride (1) selon la revendication 1, comportant un module de répartition mécanique (40') relié mécaniquement en entrée à la turbomachine non propulsive (T) et mécaniquement en sortie, d'une part, au système de génération électrique (20) et, d'autre part, au système auxiliaire d'entrainement mécanique (30)

5. Chaine propulsive hybride (1) selon l'une des revendications 1 à 4, dans laquelle le dispositif de couplage commandable (4) est configuré pour être activé automatiquement en cas de chute de la vitesse de l'arbre de rotor (32) d'un rotor propulsif (R1-R4) par rapport à sa vitesse de consigne lorsque le rotor propulsif (R1-R4) est alimenté par une liaison électrique (E1-E4).

6. Chaine propulsive hybride (1) selon la revendication 5, dans laquelle le dispositif de couplage commandable (4) comporte au moins une roue libre.

7. Chaine propulsive hybride (1) selon la revendication 5, dans laquelle le dispositif de couplage commandable (4) comporte au moins un premier organe de friction (41) et au moins un deuxième organe de friction (42).

8. Chaine propulsive hybride (1) selon l'une des revendications 1 à 7, dans laquelle chaque rotor propulsif (R1-R4) comporte au moins une soufflante propulsive, de préférence, deux soufflantes propulsives contrarotatives.

9. Aéronef comportant une chaine propulsive hybride (1) selon l'une des revendications 1 à 8.

10. Procédé d'utilisation d'un aéronef selon la revendication 9, le procédé comportant :
- une étape d'entrainement d'une pluralité de rotors propulsifs (R1-RX) via les liaisons électriques (E1-E4), et
- une étape d'entrainement d'au moins un desdits rotors propulsifs (R1-RX) via au moins une liaison mécanique (M1-M4) en cas d'indisponibilité partielle ou totale du système de génération électrique (20).

## Patentansprüche

1. Hybridantriebsstrang (1) für Luftfahrzeug, wobei der Hybridantriebsstrang (1) eine Vielzahl Antriebsrotoren (R1-RX) aufweist, die mit einem Stromverteilungsmodul (10) durch eine Vielzahl elektrischer Verbindungen (E1-E4) verbunden sind, wobei das Stromverteilungsmodul (10) zum einen mit einer Nichtantriebs-Strömungsmaschine (T) über ein Stromerzeugungssystem (20) und zum anderen mit einer elektrischen Batterie (BAT) verbunden ist, wobei jeder Antriebsrotor (R1-R4) ein Statororgan (30) und mindestens eine Rotorwelle (32) aufweist, die ausgelegt ist, um im Verhältnis zum Statororgan (30) rotatorisch angetrieben zu werden, wenn das Statororgan (30) von mindestens einer elektrischen Verbindung (E1-E4) versorgt wird, wobei der Hybridantriebsstrang ein mechanisches Hilfsantriebssystem (30) aufweist, das mit der Nichtantriebs-Strömungsmaschine (T) mechanisch verbunden ist, wobei das mechanische Hilfsantriebssystem (30) eine Vielzahl mechanischer Verbindungen (M1-M4) aufweist, um mindestens eine Rotorwelle (32) jedes Antriebsrotors (R1-R4) mechanisch rotatorisch anzutreiben, wobei jede mechanische Verbindung (M 1-M4) mit einer Rotorwelle (32) eines Antriebsrotors (R1-R4) durch eine steuerbare Kopplungsvorrichtung (4) verbunden ist.

2. Hybridantriebsstrang (1) nach Anspruch 1, wobei, wobei das Stromerzeugungssystem (20) ein mechanisches Verteilungsmodul (40) aufweist, das am Eingang mit der Nichtantriebs-Strömungsmaschine (T) mechanisch verbunden ist und am Ausgang mit mindestens einem Stromerzeuger (G1, G2, GN) mechanisch verbunden ist, das mechanische Hilfsantriebssystem (30) mit dem mechanischen Verteilungsmodul (40) verbunden ist.

3. Hybridantriebsstrang (1) nach Anspruch 2, wobei die mechanischen Verbindungen (M1-M4) des mechanischen Hilfsantriebssystems (30) am Ausgang mit dem mechanischen Verteilungsmodul (40) verbunden sind.

4. Hybridantriebsstrang (1) nach Anspruch 1, aufweisend ein mechanisches Verteilungsmodul (40'), das am Eingang mit der Nichtantriebs-Strömungsmaschine (T) mechanisch verbunden ist und am Ausgang zum einen mit dem Stromerzeugungssystem (20) und zum anderen mit dem mechanischen Hilfsantriebssystem (30) mechanisch verbunden ist.

5. Hybridantriebsstrang (1) nach einem der Ansprüche 1 bis 4, wobei die steuerbare Kopplungsvorrichtung (4) ausgelegt ist, um bei einem Abfall der Geschwindigkeit der Rotorwelle (32) eines Antriebsrotors (R1-R4) im Verhältnis zu seiner Sollgeschwindigkeit automatisch aktiviert zu werden, wenn der Antriebsrotor (R1-R4) von einer elektrischen Verbindung (E1-E4) versorgt wird.

6. Hybridantriebsstrang (1) nach Anspruch 5, wobei die steuerbare Kopplungsvorrichtung (4) mindestens einen Freilauf aufweist.

7. Hybridantriebsstrang (1) nach Anspruch 5, wobei die steuerbare Kopplungsvorrichtung (4) mindestens ein erstes Reibungsorgan (41) und mindestens ein zweites Reibungsorgan (42) aufweist.

8. Hybridantriebsstrang (1) nach einem der Ansprüche 1 bis 7, wobei jeder Antriebsrotor (R1-R4) mindestens ein Antriebsgebläse, vorzugsweise zwei gegenrotatorische Antriebsgebläse, aufweist.

9. Luftfahrzeug, das einen Hybridantriebsstrang (1) nach einem der Ansprüche 1 bis 8 aufweist.

10. Verfahren zur Verwendung eines Luftfahrzeugs nach Anspruch 9, wobei das Verfahren aufweist:
- einen Antriebsschritt einer Vielzahl Antriebsrotoren (R1-RX) über die elektrischen Verbindungen (E1-E4), und
- einen Antriebsschritt von mindestens einem der Antriebsrotoren (R1-RX) über mindestens eine mechanische Verbindung (M1-M4) bei einer teilweisen oder vollständigen Nichtverfügbarkeit des Stromerzeugungssystems (20).

## Claims

1. A hybrid propelling chain (1) for an aircraft, the hybrid propelling chain (1) comprising a plurality of propelling rotors (R1-RX) connected to an electrical distribution module (10) through a plurality of electrical connections (E1-E4), the electrical distribution module (10) being connected, on the one hand, to a non-propelling turbomachine (T) via an electric generation system (20) and, on the other hand, to an electric battery (BAT), each propelling rotor (R1-R4) comprising a stator member (30) and at least one rotor shaft (32) which is configured to be rotatably driven with respect to the stator member (30) when the stator member (30) is powered by at least one electrical connection (E1-E4), the hybrid propelling chain comprising an auxiliary mechanical drive system (30) mechanically connected to the non-propelling turbomachine (T), the auxiliary mechanical drive system (30) comprising a plurality of mechanical connections (M1-M4) for mechanically rotatably driving at least one rotor shaft (32) of each propelling rotor (R1-R4), each mechanical connection (M1-M4) being connected to a rotor shaft (32) of a propelling rotor (R1-R4) by a controllable coupling device (4).

2. The hybrid propelling chain (1) according to claim 1, wherein the electric generation system (20) comprises a mechanical distribution module (40) mechanically connected as an input to the non-propelling turbomachine (T) and mechanically connected as an output to at least one current generator (G1, G2, GN), the auxiliary mechanical drive system (30) is connected to the mechanical distribution module (40).

3. The hybrid propelling chain (1) according to claim 2, wherein, the mechanical connections (M1-M4) of the auxiliary mechanical drive system (30) are connected as an output to the mechanical distribution module (40).

4. The hybrid propelling chain (1) according to claim 1, comprising a mechanical distribution module (40') mechanically connected as an input to the non-propelling turbomachine (T) and mechanically connected as an output, on the one hand, to the electric generation system (20) and, on the other hand, to the auxiliary mechanical drive system (30).

5. The hybrid propelling chain (1) according to one of claims 1 to 4, wherein the controllable coupling device (4) is configured to be activated automatically in the event of a drop in the speed of the rotor shaft (32) of a propelling rotor (R1-R4) relative to its speed setpoint when the propelling rotor (R1-R4) is powered by an electrical connection (E1-E4).

6. The hybrid propelling chain (1) according to claim 5, wherein the controllable coupling device (4) comprises at least one freewheel.

7. The hybrid propelling chain (1) according to claim 5, wherein the controllable coupling device (4) comprises at least one first friction member (41) and at least one second friction member (42).

8. The hybrid propelling chain (1) according to one of claims 1 to 7, wherein each propelling rotor (R1-R4) comprises at least one propelling fan, preferably two counterrotating propelling fans.

9. An aircraft comprising a hybrid propelling chain (1) according to one of claims 1 to 8.

10. A method for using an aircraft according to claim 9, the method comprising:
- a step of driving a plurality of propelling rotors (R1-RX) via the electrical connections (E1-E4), and
- a step of driving at least one of said propelling rotors (R1-RX) via at least one mechanical connection (M 1-M4) in case of partial or total unavailability of the electric generation system (20).
